# EUROPEAN PATENT APPLICATION

(11) **EP 3 570 609 A1**
(43) Date of publication of application: **20.11.2019**
(21) Application number: 18739384.8
(22) Date of filing: 12.01.2018
(51) Int. Cl.: H04W 72/04

(54) **USER TERMINAL AND RADIO COMMUNICATION METHOD**

(30) Priority: 12.01.2017 JP 2017003666
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); HOU, Xiaolin, Beijing 100190 (CN); JIANG, Huiling, Beijing 100190 (CN); LI, Can, Beijing 100876 (CN); LI, Yong, Beijing 100876 (CN)
(74) Representative: Hoffmann Eitle
(86) International application number: PCT/JP2018/000623
(87) International publication number: WO 2018/131676

(57) **Abstract**

The present invention is designed to control monitoring of DL control channel candidates in sTTIs adequately. A user terminal, according to the present invention, has a receiving section that receives downlink control information (DCI), and a control section that controls monitoring of DL control channel candidates in sTTIs based on the DCI. When the DCI is not detected, the control section assumes that the monitoring of DL control channel candidates in the sTTIs is activated.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT: New Radio Access Technology)," "LTE Rel. 14," "LTE Rel. 15 (or later versions)," and so on) are under study for the purpose of achieving further broadbandization and increased speed beyond LTE.

In existing LTE systems (for example, LTE Rel. 13 or earlier versions), downlink (DL) and/or uplink (UL) communication are performed using 1-ms transmission time intervals (TTIs) (also referred to as "subframes" and so on). These 1-ms TTIs are the time unit for transmitting one channel-encoded data packet, and serve as the unit of processing in, for example, scheduling, link adaptation, retransmission control (HARQ-ACK: Hybrid Automatic Repeat reQuest-ACKnowledgement) and so on.

Also, in existing LTE systems, in a TTI of given carrier (component carrier (CC), cell, etc.), time fields for DL control channels (for example, PDCCH: Physical Downlink Control Channel), and time fields for data channels (including a DL data channel (for example, PDSCH: Physical Downlink Shared Channel) and/or a UL data channel (for example, PUSCH: Physical Uplink Shared Channel)) that are scheduled by downlink control information (DCI), which is transmitted in DL control channels, are provided. In the time field for DL control channels, DL control channels are arranged throughout the system band.

Further, in existing LTE system, in a TTI of a given carrier, UL control channels (for example, PUSCH: Physical Uplink Control Channel) for communicating uplink control information (UCI) are arranged in fields at both ends of the system band, and UL data channels (for example, PUSCH: Physical Uplink Shared Channel) are arranged in fields other than both edge fields.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Future radio communication systems (for example, LTE Rel. 14 or 15, 5G, NR, etc.) are under research to introduce TTIs that have different time durations than those 1-ms TTIs (subframes) used in existing LTE systems (for example, TTIs shorter than 1-ms TTIs (which may be referred to as "short TTIs," "sTTIs," etc.)).

A user terminal that communicates using sTTIs monitors (blind-decodes) candidates for DL control channels (DL control channel candidates) in sTTIs, and detects DCI for sTTIs. However, when the user terminal keeps monitoring DL control channel candidates in every sTTI, the user terminal's power consumption may increase compared to the case of monitoring DL control channel candidates for every 1-ms TTI. Therefore, it is desirable to control monitoring of DL control channel candidates in sTTIs adequately.

The present invention has been made in view of the above, and it is therefore an object of the present invention to provide a user terminal and a radio communication method, whereby monitoring of DL control channel candidates in sTTIs can be controlled adequately.

### Solution to Problem

According to one aspect of the present invention, a user terminal has a receiving section that receives downlink control information (DCI), and a control section that controls monitoring of a DL control channel candidate in a second transmission time interval (TTI), which is shorter than a first TTI, based on the DCI, and, when the DCI is not detected, the control section assumes that the monitoring of the DL control channel candidate in the second TTI is activated.

### Advantageous Effects of Invention

According to the present invention, it is possible to control monitoring of DL control channel candidates in sTTIs adequately.

### Brief Description of Drawings

FIGs. 1A and 1B are diagrams to show examples of controlling activation or deactivation of sTTI monitoring;
FIG. 2 is a diagram to show an example of a slow-DCI detection failure;
FIG. 3 is a diagram to show an example of determining the periodicity and/or the starting position of slow DCI according to a first aspect of the present invention;
FIG. 4 is a diagram to show an example of an activation/deactivation effective time according to the first aspect;
FIG. 5 is a diagram to show a first example of user terminal-common slow DCI according to the first aspect;
FIG. 6 is a diagram to show a second example of user terminal-common slow DCI according to the first aspect;
FIG. 7 is a diagram to show a third example of user terminal-common slow DCI according to the first aspect;
FIG. 8 is a diagram to show a first example of user terminal-specific slow DCI according to the first aspect;
FIG. 9 is a diagram to show a second example of a user terminal-specific slow DCI according to the first aspect;
FIG. 10 is a diagram to show a third example of user terminal-specific slow DCI according to the first aspect;
FIG. 11 is a diagram to show an example of an effective time field according to a second aspect of the present invention;
FIG. 12 is a diagram to show an example of a deactivation is effective time according to the second aspect;
FIG. 13 is a diagram to show an example of a schematic structure of a radio communication system according to the present embodiment;
FIG. 14 is a diagram to show an example of an overall structure of a radio base station according to present embodiment;
FIG. 15 is a diagram to show an example of a functional structure of a radio base station according to present embodiment;
FIG. 16 is a diagram to show an example of an overall structure of a user terminal according to present embodiment;
FIG. 17 is a diagram to show an example of a functional structure of a user terminal according to present embodiment; and
FIG. 18 is a diagram to show an example hardware structure of a radio base station and a user terminal according to the present embodiment.

### Description of Embodiments

In existing LTE systems (for example, in LTE Rel. 13 or before), in a predetermined number of symbols (maximum three symbols) at the top of a TTI of 1 ms, a DL control channel (also referred to as "PDCCH," "legacy PDCCH," etc.) is arranged over the whole frequency band (system band) of a given carrier (CC, cell, etc.).

In symbols after the symbols where the DL control channel is arranged in this 1-ms TTI, data channels (including PDSCH and/or PUSCH) are arranged in frequency resources (also referred to as, for example, "physical resource blocks (PRBs)," "resource blocks (RBs)," etc.), which are allocated by DCI transmitted through the DL control channel, and/or in a resource block group (RBG) comprised of a predetermined number of PRBs. Thus, in existing LTE systems, time fields for DL control channels and time fields for data channels are provided within a TTI of 1 ms, and DL control channels and data channels are time-division-multiplexed (TDM: Time Division Multiplexing).

On the other hand, future radio communication systems (for example, LTE Rel. 14 or 15, 5G, NR, etc.) are under study to provide support for TTIs having different time durations (TTI durations) than the 1-ms TTIs (subframes) used in existing LTE systems, in order to realize control with low latency (latency reduction)and high efficiency. For example, a study is in progress to introduce TTIs that are shorter than subframes (also referred to as "sTTIs," "short TTIs," etc.).

A user terminal that communicates using sTTIs monitors (blind-decodes) one or more candidates (hereinafter also referred to as "sPDCCH candidates") for a DL control channel for sTTIs (hereinafter also referred to as "sPDCCH"), and detects user terminal-specific DCI for sTTIs (also referred to as "fast DCI," "sDCI," "sDCI 1," "first sDCI," etc.). This fast DCI schedules a DL data channel (also referred to as, for example, "sPDSCH") and/or a UL data channel (also referred to as, for example, "sPUSCH") for sTTIs. This monitoring of sPDCCH candidates for detecting fast DCI is also referred to as "sTTI monitoring."

Meanwhile, when the user terminal performs sTTI monitoring for each sTTI in each subframe, the number of times the user terminal performs blind decoding per subframe will increase, and, given that the user terminal has to keep performing blind decoding every short period of time (for example, the user terminal has to perform blind decoding every two to seven symbols), the power consumption of the user terminal may increase. So, there is an ongoing study to control activation or deactivation of sTTI monitoring using DCI for controlling sTTI monitoring (also referred to as "slow DCI," "second sDCI," "sDCI 2," etc.).

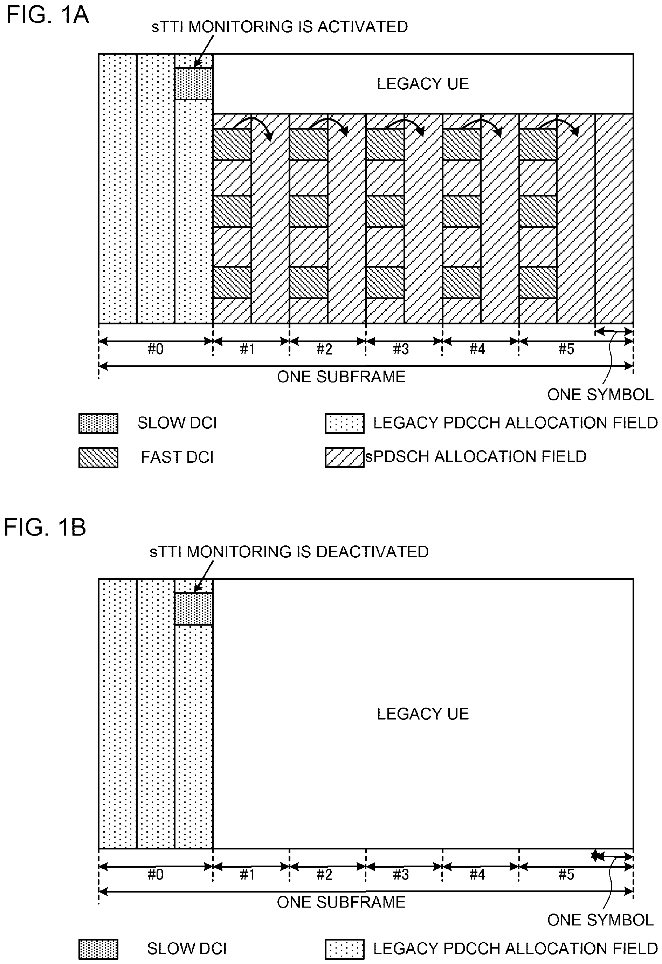

FIGs. 1 are diagrams to show examples of controlling activation or deactivation of sTTI monitoring. In the example of FIGs. 1A and 1B, sTTIs #0 to #5 are provided in one subframe (1-ms TTI), sTTIs #0 and #5 are comprised of three symbols, and sTTIs #1 to #4 are comprised of two symbols. Note that the number of sTTIs in one subframe and the number of symbols per sTTI are not limited to the examples shown in FIGs. 1A and IB. Also, in FIGs. 1A and 1B, the field where the legacy PDCCH is allocated is three symbols, but this is by no means limiting. Also, in FIGs. 1A and 1B, slow DCI is transmitted in the legacy PDCCH, but this is by no means limiting.

FIG. 1A shows a case where sTTI monitoring is activated by slow DCI. As shown in FIG. 1A, the user terminal monitors (blind-decodes) candidates for the legacy PDCCH in the legacy PDCCH allocation field, and detects slow DCI that activate sTTI monitoring. In this case, based on the slow DCI detected, the user terminal performs sTTI monitoring in each of sTTIs #1 to #5. In sTTIs where the user terminal detects fast DCI for the user terminal, the user terminal receives the sPDSCH or transmits the sPUSCH, based on the fast DCI detected.

By contrast now, FIG. 1B shows a case where sTTI monitoring is deactivated by slow DCI. The user terminal detects slow DCI that deactivates sTTI monitoring by monitoring (blind-decoding) candidates for the legacy PDCCH. In this case, the user terminal can stop sTTI monitoring in all of sTTIs #1 to #5.

Thus, if activation or deactivation of sTTI monitoring is controlled by means of slow DCI, sTTI monitoring can be deactivated in accordance with scheduling of the sPDSCH or the sPUSCH for a user terminal, so that it is possible to prevent this user terminal's power consumption from increasing. However, if the user terminal fails to detect slow DCI that activates sTTI monitoring, severe performance degradation may be caused.

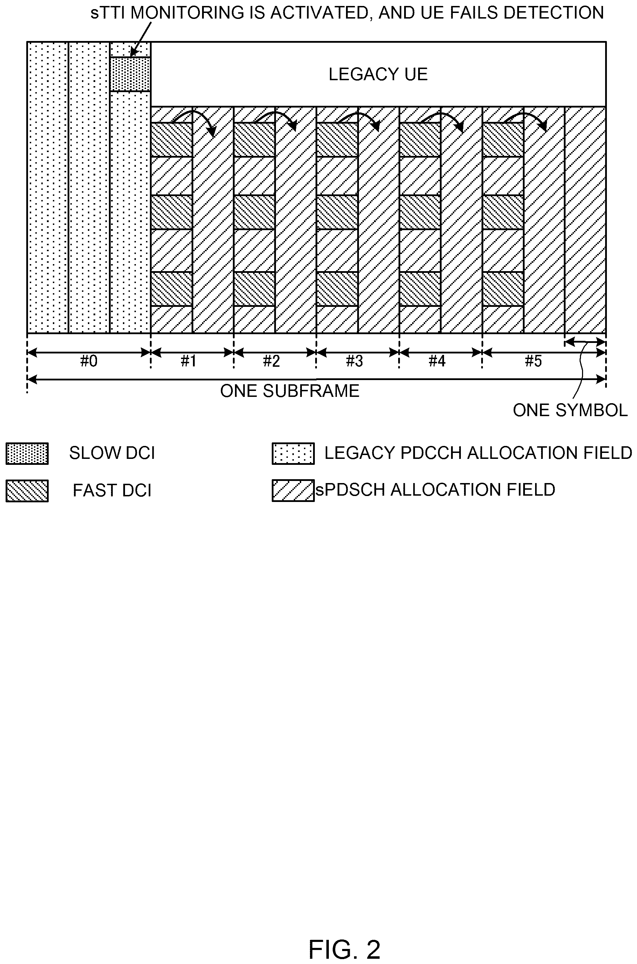

FIG. 2 is a diagram to show an example of a slow-DCI detection failure. Note that the subframe structure shown in FIG. 2 is the same as those of FIGs. 1A and IB. As shown in FIG. 2, when a user terminal fails to detect slow DCI that activate sTTI monitoring, the user terminal does not perform sTTI monitoring in sTTIs #1 to #5 even if the sPDSCH is scheduled for the user terminal in sTTIs #1 to #5. Therefore, receipt of the sPDSCH may fail, which may then cause a severe degradation of performance.

Thus, when sTTI monitoring is controlled based on slow DCI and the user terminal fails to detect this slow DCI, this may lead to a severe degradation of performance. So, the present inventors have conceived of preventing performance degradation by controlling sTTI monitoring in a fail-safe manner (that is, by assuming that sTTI monitoring is activated when slow DCI is not detected).

To be more specific, the present inventors have come up with the idea of indicating activation or deactivation of sTTI monitoring with slow DCI, so that sTTI monitoring is assumed to be activated if a user terminal does not detect the slow DCI (especially if the user terminal fails to detect slow DCI that indicates activation of sTTI monitoring) (first aspect), and, alternatively, activation of sTTI monitoring is seen as part of the default behavior of the user terminal, and sTTI monitoring is activated unless slow DCI to indicate deactivation of sTTI monitoring is detected (second aspect).

Now, the present embodiment will be described below in detail. According to the present embodiment, the time duration of symbols (symbol duration) constituting a subframe (1-ms TTI) and the duration of symbols constituting an sTTI are equal (that is, equal subcarrier spacing), but this is by no means limiting. For example, the symbol duration of an sTTI may be shorter than the symbol duration of a subframe. In addition, in the following description, a subframe (1-ms TTI) may be formed with a TTI of a longer time duration than an sTTI, and needs not be 1 ms.

### (First Aspect)

In a first aspect of the present invention, slow DCI includes indication information that indicates activation or deactivation (hereinafter also referred to as "activation/deactivation") of sTTI monitoring. When the slow DCI is detected properly, a user terminal activates or deactivates sTTI monitoring according to the indication information included in the slow DCI. On the other hand, if this slow DCI is not detected (when the user terminal fails to detect the slow DCI), the user terminal will assume that sTTI monitoring is activated.

This slow DCI that contains indication information may be transmitted in the legacy PDCCH (in the legacy PDCCH allocation field), or in the sPDCCH (in the predetermined sPDCCH field) in a specific sTTI (for example, the first sTTI in a subframe). When slow DCI is transmitted in the legacy PDCCH, the user terminal monitors one or more legacy PDCCH candidates and detects slow DCI. On the other hand, when slow DCI is transmitted in the sPDCCH in a specific sTTI, the user terminal monitors one or more sPDCCH candidates in the specific sTTI and detects slow DCI.

### <Slow DCI periodicity and/or starting position>

In the first aspect, the above slow DCI that contains indication information is transmitted at a predetermined periodicity. The periodicity and/or the starting position of this slow DCI are configured based on parameters that relate to the slow DCI. These slow DCI-related parameters are reported from radio base stations to user terminals via higher layer signaling and/or physical layer signaling.

Also, these parameters related to the slow DCI may include, for example, an indicator of slow DCI configuration (also referred to as "configuration indicator," "configuration index," "IS_{DCI2}," etc.). Note that, if the slow DCI-related parameters (for example, the configuration indicator (IS_{DCI2}), which indicates the periodicity and/or the starting position) are not obtained (not configured) in a user terminal, the slow DCI that contains indication information may be transmitted in the legacy PDCCH, and the periodicity and/or the starting position of this slow DCI may assume the values of the legacy PDCCH (for example, every subframe).

When the slow DCI is transmitted in the legacy PDCCH, the configuration indicator (IS_{DCI2}) of the slow DCI may be reported from the radio base station to the user terminal via higher layer signaling, and, when the slow DCI is transmitted in the sPDCCH in a specific sTTI, the configuration indicator of the slow DCI may be reported from the radio base station to the user terminal via higher layer signaling or in the legacy PDCCH.

Based on the configuration indicator (IS_{DCI2}), the user terminal determines the periodicity (sDCI2_{PERIODICITY}) and/or the starting position of the slow DCI. Note that, if the slow DCI is transmitted in the legacy PDCCH, the periodicity and/or the starting position may be determined based on units of subframes (TTIs of, for example, 1 ms), while, when the slow DCI is transmitted in the sPDCCH in a specific sTTI, the periodicity and/or the starting position may be defined based on units of sTTIs.

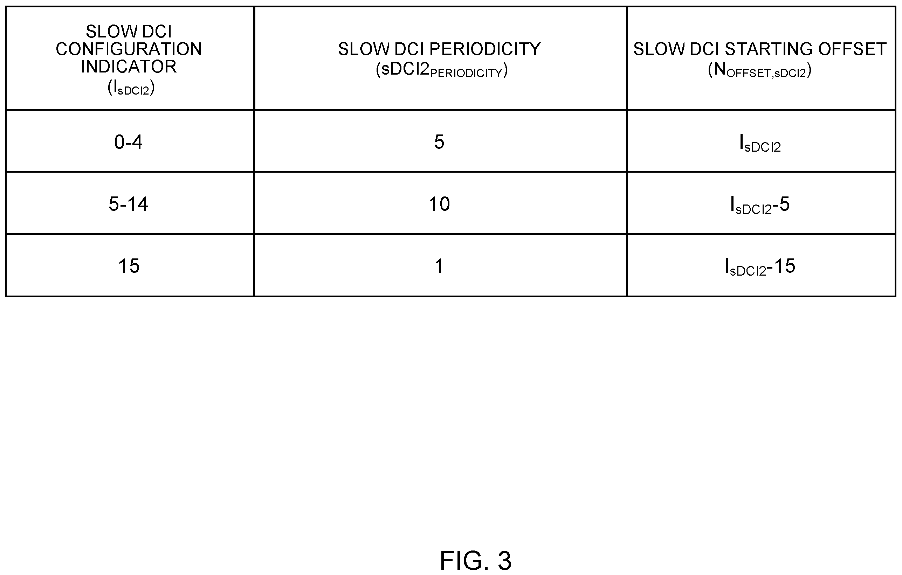

FIG. 3 is a diagram to show an example of determining the periodicity and/or the starting position of slow DCI according to the first aspect. As shown in FIG. 3, a slow DCI configuration indicator (IS_{DCI2}) may be associated with a slow DCI periodicity (also referred to as "transmission periodicity," "sDCI2_{PERIODICITY}," etc.) and/or a slow DCI starting offset (also referred to as "subframe offset," "offset," "N_{OFFSET,sDCI2}," etc.).

Referring to FIG. 3, the user terminal may determine the periodicity of slow DCI (sDCI2_{PERIODICITY}) with the value associated with the configuration indicator (IS_{DCI2}) from the radio base station. For example, based on FIG. 3, if the value of the configuration indicator (IS_{DCI2}) is 0 to 4, 5 to 14 or 15, in each case, the user terminal determines the periodicity of the slow DCI (sDCI2_{PERIODICITY}) to be 5, 10 or 1 [TTI or sTTI].

Also, the user terminal may determine the starting DC offset of the slow DCI (N_{OFFSET,sDCI2}) with the value associated with the configuration indicator (IS_{DCI2}) from the radio base station, and determine the starting position of the slow DCI based on the starting offset (N_{OFFSET,sDCI2}). For example, referring to FIG. 3, when the value of the configuration indicator (IS_{DCI2}) is 0 to 4, 5 to 14 or 15, in each case, the user terminal determines the starting offset of the slow DCI (N_{OFFSET,sDCI2}) to be IS_{DCI2} (=0-4), IS_{DCI2}-5 (=0-9) or IS_{DCI2}-15 (=0) [TTI or sTTI].

The user terminal determines the starting position of the slow DCI based on this starting offset (N_{OFFSET,sDCI2}). For example, the user terminal may select a TTI or an sTTI that satisfies following equation 1 as the starting position of the slow DCI (also referred to as "transmission subframe," "transmission instance," etc.).

(10 × *n_{f}* + *i* - *N*_{*OFFSET,sDCI*2})mods*DCI*2*_{PERIODICITY}* = 0 ... (Equation 1) Note that, in equation 1, nf is the system frame number (SFN), i is the TTI number or the sTTI number in the radio frame, N_{OFFSET,sDCI2} is the above starting offset, sDCI2_{PERIODICITY} is the above periodicity of the slow DCI.

### <Activation or Deactivation Effective Time>

According to the first aspect, the time activation/deactivation of sTTI monitoring by the user terminal is effective (effective time) based on indication information contained in slow DCI may be the same as the periodicity (sDCI2_{PERIODICITY}) of the slow DCI.

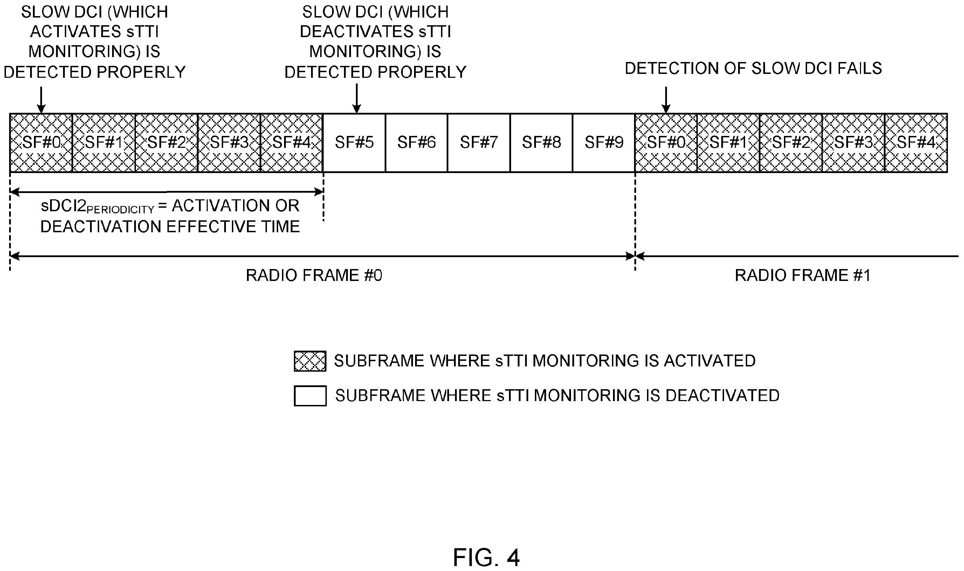

FIG. 4 is a diagram to show an example of activation/deactivation effective time according to the first aspect. Note that, in FIG. 4, slow DCI is transmitted in the legacy PDCCH, but the slow DCI may be transmitted in the sPDCCH in a specific sTTI, as mentioned earlier. Also, although with reference to FIG. 4, a case will be described below where the periodicity of slow DCI (sDCI2_{PERIODICITY}) is five subframes and the starting position of slow DCI is subframe #0, FIG. 4 is simply an example, and by no means limiting.

For example, referring to FIG. 4, slow DCI that contains indication information for activating sTTI monitoring is detected in subframe #0 of radio frame #0, and the user terminal activates sTTI monitoring in five subframes (#0 to #4), up to the next slow DCI transmission timing.

In subframe #5 of radio frame #0, slow DCI that contains indication information for deactivating sTTI monitoring is detected, and the user terminal deactivates sTTI monitoring in five subframes (#5 to #9) up to the next slow DCI transmission timing.

Although subframe #0 in radio frame #1 is a transmission timing of slow DCI that contains indication information for activating/deactivating sTTI monitoring, the user terminal fails to detect slow DCI in this subframe #0. In this case, the user terminal activates sTTI monitoring in five subframes (#0 to #4) up to the next slow DCI transmission timing.

As shown in FIG. 4, according to the first aspect, if the user terminal fails to detect slow DCI that contains indication information to activate/deactivate sTTI monitoring, the user terminal will assume that sTTI monitoring will be activated. Therefore, when slow DCI fails to be detected, it is still possible to prevent the degradation of performance due to failure to receive the sPDSCH.

Note that slow DCI may include, for example, the length of an sTTI (or the number of symbols), information about the frequency resources where sTTI monitoring is performed, and so on, in addition to the indication information that is indicative of activation/deactivation of sTTI monitoring.

In addition, if two or more sTTI parameter sets (the length of an sTTI, the number of symbols, the frequency resources that are subject to sTTI monitoring, etc.) that can be used are configured in the user terminal by higher layer signaling, slow DCI is successfully detected, and, furthermore, this slow DCI indicates activation of sTTI monitoring, the user terminal may perform sTTI monitoring based on either one parameter set contained in the slow DCI, and, if slow DCI cannot be detected, the user terminal may perform sTTI monitoring based on either predetermined one of the above parameter sets. In this case, in addition to achieving the advantages described earlier herein, it is possible to execute more flexible sTTI scheduling when slow DCI is successfully detected.

### <Signaling>

Next, signaling of slow DCI that contains indication information to activate/deactivate sTTI monitoring will be described in detail. This slow DCI containing indication information may be common to a plurality of user terminals, or may be user terminal-specific.

### «User terminal-Common Slow DCI»

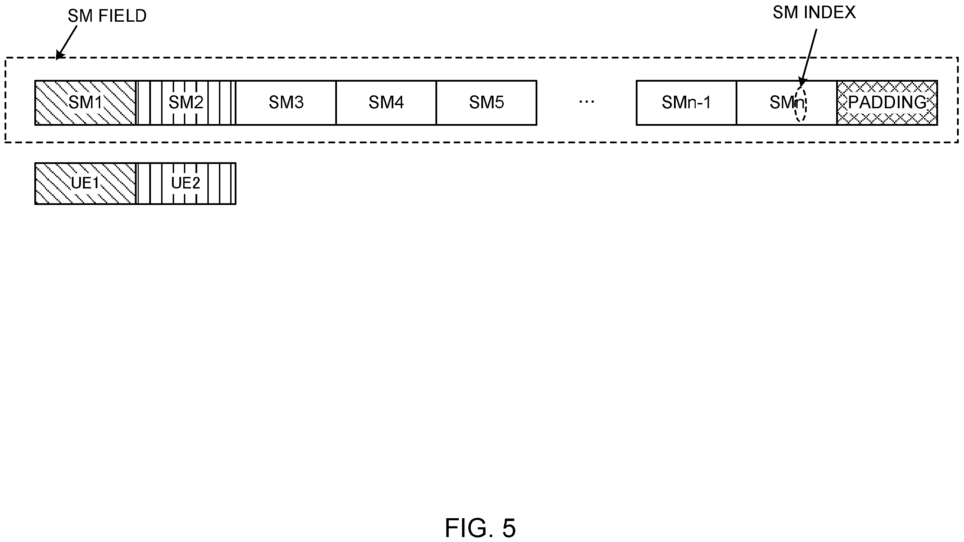

Now, referring to FIG. 5 to FIG. 7, user terminal-common slow DCI according to the first aspect will be described. This user terminal-common slow DCI may contain indication information that indicates activation/deactivation of sTTI monitoring in one or more user terminals. The indication information may be the value of a predetermined field in the slow DCI (for example, the sTTI monitoring (SM) field).

To be more specific, when one or more component carriers (also referred to as "CCs," "cells," etc.) are configured in each user terminal, the indication information in the user terminal-common slow DCI may indicate activation/deactivation of sTTI monitoring per user terminal (first example), per CC of each user terminal (second example) or per group of one or more CCs (CC group) in each user terminal (third example).

### (First Example)

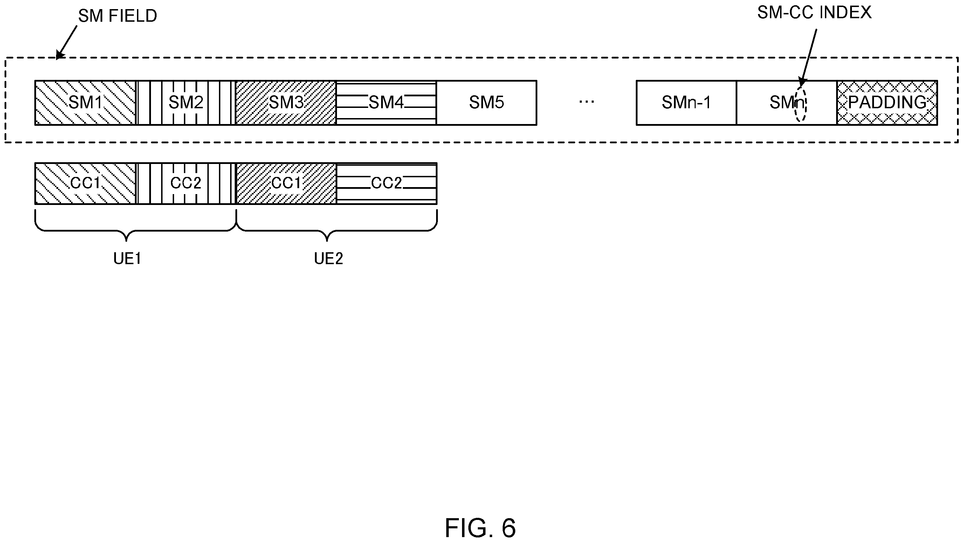

FIG. 5 is a diagram to show the first example of user terminal-common slow DCI according to the first aspect. For example, in FIG. 5, the SM field in the slow DCI is made up of a predetermined number of bits, each identified by a predetermined index (also referred to as "sTTI monitoring (SM) index," etc.). For example, in FIG. 5, the SM field includes n bits, which are identified by SM indices 1 to n, and a predetermined number of padding bits. The configuration of the SM fields is the same in FIGs. 6, 7, 9, and 10, which will be described later.

According to the first example, even if one or more CCs are configured in a user terminal, SM indices are assigned on a per user terminal basis. The bit value corresponding to SM index i (1 ≦ i ≦ n in FIG. 5) indicates activation/deactivation of sTTI monitoring in all CCs configured in the user terminal to which this SM index i is assigned. For example, the bit value "0" may indicate that sTTI monitoring is deactivated in all the CCs configured in this user terminal, and the bit value "1" may indicate that sTTI monitoring is activated in all the CCs configured in this user terminal.

For example, in FIG. 6, user terminal 1 is allocated to SM index 1, the value of the most significant bit (MSB) corresponding to SB index 1 indicates activation/deactivation of sTTI monitoring in all the CCs configured in user terminal 1. Also, user terminal 2 is allocated to the SM index 2, the value of the second bit from the left corresponding to SM index 2 indicates activation/deactivation of sTTI monitoring in all the CCs configured in the user terminal 2.

In the first example, the SM index assigned to each user terminal may be reported from the radio base station to the user terminal by way of higher layer signaling and/or physical layer signaling (for example, in the legacy PDCCH).

In addition, information for detecting slow DCI containing an SM field (also referred to as "Radio Network Temporary Identifier (RNTI)," "sTTI Monitoring (SM)-RNTI," etc.) may be reported from the radio base station to the user terminal by higher layer signaling and/or physical layer signaling (for example, in the legacy PDCCH). For example, the user terminal may detect this slow DCI by cyclic redundancy check (CRC) using SM-RNTI.

In the first example shown in FIG. 5, the bit value corresponding to an SM index indicates activation/deactivation of sTTI monitoring in all the CCs in a user terminal where this SM index is assigned. Consequently, it is possible to reduce the number of SM field bits and reduce the overhead, compared to the case where activation/deactivation of sTTI monitoring is indicated per CC or CC groups of each user terminal.

### (Second Example)

FIG. 6 is a diagram to show a second example of user terminal-common slow DCI according to the first aspect. In the second example, when one or more CCs are configured in a user terminal, SM indices are allocated on a per CC basis (that is, SM indices are allocated per user terminal and per CC). SM indices like these are also referred to as "sTTI monitoring (SM)-CC indices."

The bit value corresponding to SM-CC index i (1 ≦ i ≦ n in FIG. 6) indicates activation/deactivation of sTTI monitoring in one CC in the user terminal where this SM-CC index i is assigned. For example, the bit value "0" may indicate that sTTI monitoring is deactivated in this one CC, and the bit value "1" may indicate that sTTI monitoring is activated in this one CC.

For example, if five CCs are configured in a user terminal and sTTI operation is adopted in three out of these five CCs, five SM-CC indices are assigned to this user terminal. In this way, according to the second example, the same number of SM-CC indices as CCs configured in a user terminal are assigned to the user terminal.

For example, in FIG. 6, CC 1 of user terminal 1 is assigned to SM-CC index 1, and the value of the most significant bit corresponding to SM-CC index 1 indicates activation/deactivation of sTTI monitoring in CC 1 of user terminal 1. Also, CC 2 of user terminal 1 is assigned to SM-CC index 2, and the value of the second bit from the left corresponding to SM-CC index 2 indicates activation/deactivation of sTTI monitoring in CC 2 of user terminal 1. Similarly, SM-CC indices 3 and 4 are assigned to CCs 1 and 2 of user terminal 2, respectively.

According to the second example, the same number of SM-CC indices as CCs configured in a user terminal are reported to the user terminal. These SM-CC indices may be reported from the radio base station to the user terminal through higher layer signaling and/or physical layer signaling (for example, in the legacy PDCCH).

In addition, information for detecting slow DCI containing an SM field (also referred to as "SM-RNTI," for example) may be reported from the radio base station to the user terminal through higher layer signaling and/or physical layer signaling (for example, in the legacy PDCCH). For example, the user terminal may detect the above slow DCI by CRC using SM-RNTI.

In the second example shown in FIG. 6, activation/deactivation of sTTI monitoring in a user terminal is controlled on a per CC basis, based on bit values that correspond to SM-CC indices, so that flexible control of sTTI monitoring is made possible.

### (Third Example)

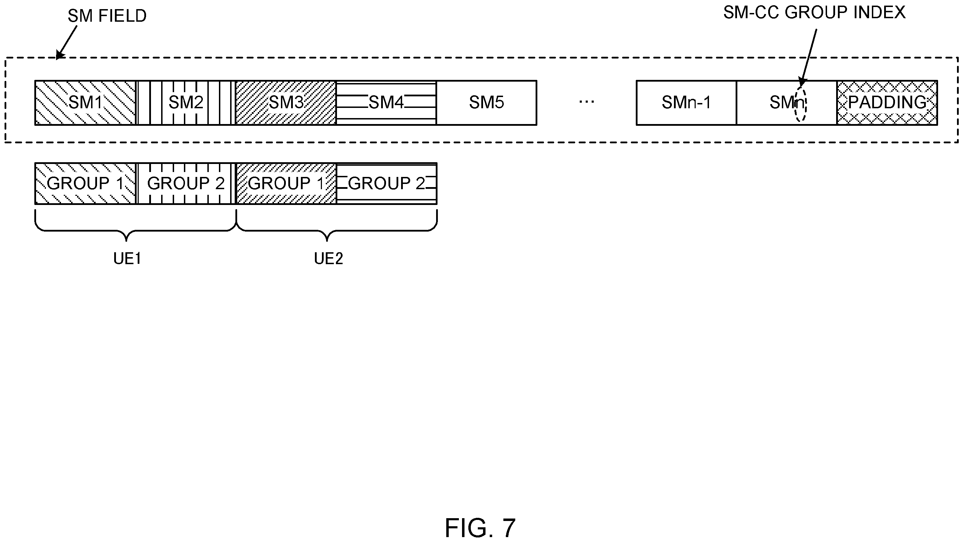

FIG. 7 is a diagram to show a third example of user terminal-common slow DCI according to the first aspect. With the third example, when one or more CCs are configured in a user terminal, an SM index is assigned to every group that is comprised of one or more CCs (CC group) (that is, SM indices are assigned per user terminal and per CC group). SM indices like these are also referred to as "sTTI monitoring (SM)-CC group indices."

The bit value corresponding to SM-CC group index i (1 ≦ i ≦ n in FIG. 7) indicates activation/deactivation of sTTI monitoring in one CC group in the user terminal where this SM-CC group index i is assigned. For example, the bit value "0" may indicate that sTTI monitoring is deactivated in this one CC group, and the bit value "1" may indicate that sTTI monitoring is activated in this one CC group.

For example, in FIG. 7, CC group 1 of user terminal 1 is assigned to SM-CC group index 1, and the value of the most significant bit corresponding to SM-CC group index 1 indicates activation/deactivation of sTTI monitoring in CC group 1 of user terminal 1. Also, CC group 2 of user terminal 1 is assigned to SM-CC group index 2, the value of the second bit from the left corresponding to SM-CC group index 2 indicates activation/deactivation of sTTI monitoring in CC group 2 of user terminal 1. Similarly, SM-CC indices 3 and 4 are assigned to CC groups 1 and 2 of user terminal 2, respectively.

According to the third example shown in FIG. 7, the same number of SM-CC group indices as CC groups configured in a user terminal are reported to the user terminal. These SM-CC group indices may be reported from the radio base station to the user terminal through higher layer signaling and/or physical layer signaling (for example, in the legacy PDCCH).

In addition, information for detecting slow DCI containing an SM field (also referred to as "SM-RNTI" and so on, for example) may be reported from the radio base station to the user terminal through higher layer signaling and/or physical layer signaling (for example, in the legacy PDCCH). For example, the user terminal may detect this slow DCI by CRC using SM-RNTI.

According to the third example, activation/deactivation of sTTI monitoring in a user terminal is controlled per CC group, based on bit values corresponding to SM-CC group indices, so that it is possible to reduce the increase of overhead due to the SM field, while controlling sTTI monitoring in a flexible manner.

### «User Terminal-Specific Slow DCI»

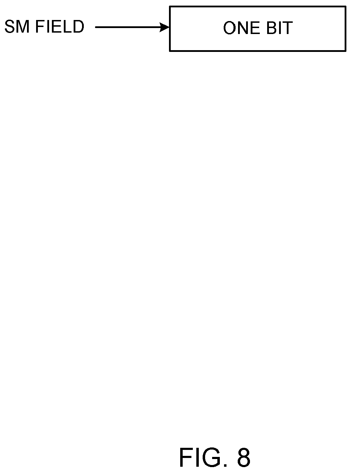

Referring to FIG. 8 to FIG. 10, user terminal-specific slow DCI according to the first aspect will be described. This slow DCI is specific to a user terminal and may contain indication information that indicates activation/deactivation of sTTI monitoring in this user terminal. The indication information may be the value of a predetermined field in the slow DCI (for example, the SM field).

To be more specific, when one or more CCs are configured in this user terminal, the indication information in the user terminal-specific slow DCI may indicate activation/deactivation of sTTI monitoring for all CCs in common (first example), for each CC (second example) or for each CC group (third example).

### (First Example)

FIG. 8 is a diagram to show a first example of user terminal-specific slow DCI according to the first aspect. With the first example, the SM field value in user terminal-specific slow DCI controls activation/deactivation of sTTI monitoring in the user terminal for all CCs in common.

For example, in FIG. 8, the SM field in the slow DCI is comprised of one bit. If the bit value of this SM field is "0," this may indicate that sTTI monitoring is deactivated in all the CCs configured in the user terminal, and, when this bit value is "1," it may indicate that sTTI monitoring is activated in all the CCIs configured in the user terminal.

In FIG. 8, the user terminal-specific slow DCI containing an SM field may be detected by CRC using user terminal-specific RNTIs.

In the first example shown in FIG. 8, the bit value of the SM field in the user terminal-specific slow DCI indicates activation/deactivation of sTTI monitoring in all CCs. Consequently, it is possible to reduce the number of SM field bits and reduce the overhead, compared to the case where activation/deactivation of sTTI monitoring is indicated per CC or per CC group.

### (Second Example)

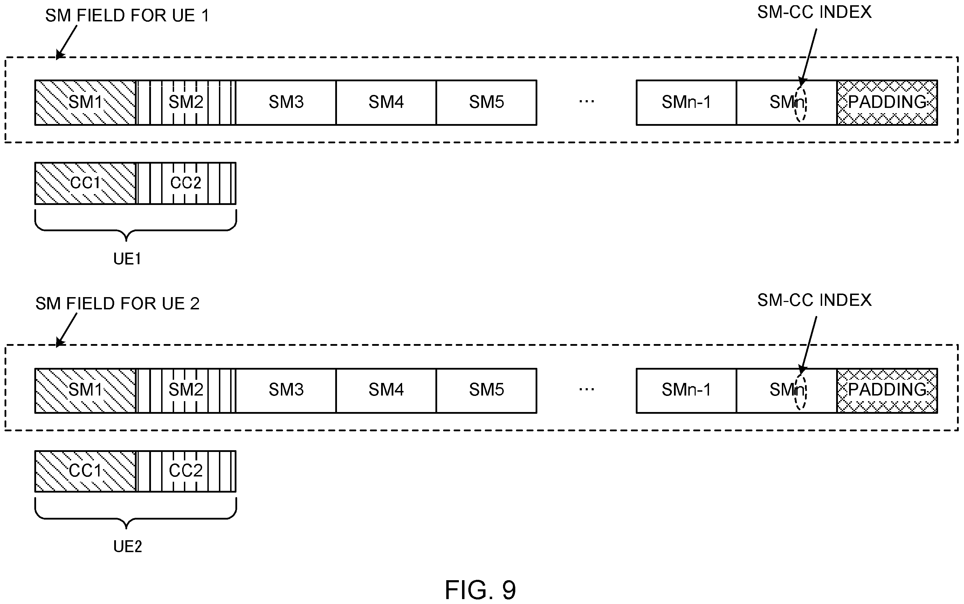

FIG. 9 is a diagram to show a second example of user terminal-specific slow DCI according to the first aspect. With the second example, activation/deactivation of sTTI monitoring in a user terminal is controlled per CC, by the SM field value in user terminal-specific slow DCI.

In FIG. 9, the SM field in each user terminal's slow DCI is comprised of n bits, identified by SM indices 1 to n, and a predetermined number of padding bits. When one or more CCs are configured in each user terminal, SM indices are assigned on a per CC basis. These SM indices are also referred to as "SM-CC indices."

The bit value corresponding to SM-CC index i (1 ≦ i ≦ n in FIG. 9) indicates activation/deactivation of sTTI monitoring in one CC where this SM-CC index i is assigned. For example, the bit value is "0" may indicate that sTTI monitoring is deactivated in this one CC, and the bit value "1" may indicate that sTTI monitoring is activated in this one CC.

For example, in FIG. 9, CC 1 is assigned to SM-CC index 1 in the SM field in the slow DCI for user terminal 1, CC 2 is assigned to SM-CC index 2. The bit values corresponding to SM-CC indices 1 and 2 (here, the values of the most significant bit and the second bit from the left) indicate activation/deactivation of sTTI monitoring in CCs 1 and 2 of user terminal 1, respectively. This also applies to the SM field in the slow DCI for user terminal 2.

In the second example, the same number of SM-CC indices as CCs configured in a user terminal are reported to the user terminal. These SM-CC indices may be reported from the radio base station to the user terminal through higher layer signaling and/or physical layer signaling (for example, in the legacy PDCCH).

Also, user terminal-specific slow DCI with an SM field may be detected by CRC using user terminal-specific RNTIs.

In the second example shown in FIG. 9, activation/deactivation of sTTI monitoring in a user terminal is controlled per CC, based on bit values corresponding to SM-CC indices, so that flexible control of sTTI monitoring is made possible.

### (Third Example)

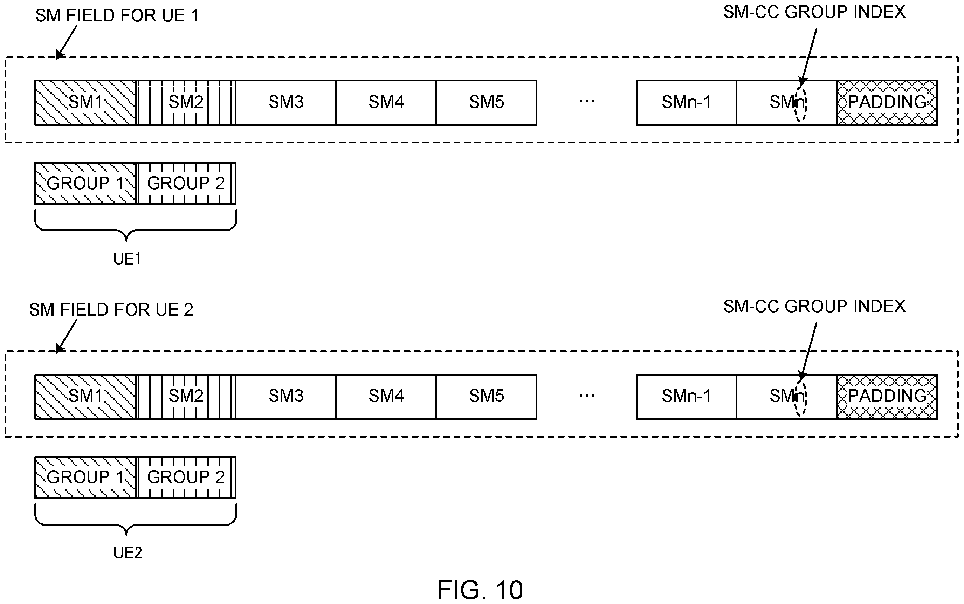

FIG. 10 is a diagram to show a third example of user terminal-specific slow DCI according to the first aspect. With the third example, activation/deactivation of sTTI monitoring in a user terminal is controlled per CC group by the SM field value in user terminal-specific slow DCI.

In FIG. 10, the SM field in each user terminal's slow DCI is comprised of n bits, which are identified by SM indices 1 to n, and a predetermined number of padding bits. When one or more CCs are configured in each user terminal, SM indices are assigned on a per CC group basis. The SM indices are also referred to as "SM-CC group indices.

The bit value corresponding to SM-CC group index i (1 ≦ i ≦ n in FIG. 9) indicates activation/deactivation of sTTI monitoring in one CC group where this SM-CC group index i is assigned. For example, the bit value "0" may indicate that sTTI monitoring is deactivated in this one CC group, and the bit value "1" may indicate that sTTI monitoring is activated in this one CC group.

For example, in FIG. 10, CC group 1 is assigned to SM-CC group index 1 in the SM field in the slow DCI for user terminal 1, and CC group 2 is assigned to SM-CC group index 2. The bit values corresponding to these SM-CC group indices 1 and 2 (here, the values of the most significant bit and the second bit from the left) indicate activation/deactivation of sTTI monitoring in CC groups 1 and 2 of user terminal 1, respectively. This also applies to the SM field in the slow DCI for user terminal 2.

According to the third example, the same number of SM-CC group indices as CC groups configured in a user terminal are reported to the user terminal. These SM-CC group indices may be reported from the radio base station to the user terminal through higher layer signaling and/or physical layer signaling (for example, in the legacy PDCCH).

Also, user terminal-specific slow DCI with an SM field may be detected by CRC using user terminal-specific RNTIs.

In the third example shown in FIG. 10, activation/deactivation of sTTI monitoring in a user terminal is controlled per CC group based on bit values that correspond to SM-CC group indices, so that sTTI monitoring can be controlled flexibly.

As described above, according to the first aspect, the indication information (for example, an SM field) that indicates activation/deactivation of sTTI monitoring for all CCs in common, for each CC or for each CC group is contained in slow DCI, so that, even if one or more CCs are configured in a user terminal, sTTI monitoring in each CC can be controlled adequately.

### (Second Aspect)

According to a second aspect, slow DCI includes indication information that indicates deactivation of sTTI monitoring. When this slow DCI is detected properly, a user terminal deactivates sTTI monitoring in accordance with the indication information included in this slow DCI. On the other hand, if this slow DCI is not detected, the user terminal will assume that sTTI monitoring is activated.

This slow DCI containing indication information may be transmitted in the legacy PDCCH or transmitted in the sPDCCH in a specific sTTI (for example, the first sTTI in a subframe). When slow DCI is transmitted in the legacy PDCCH, the user terminal monitors one or more legacy PDCCH candidates and detects slow DCI. On the other hand, when slow DCI is transmitted in the sPDCCH in a specific sTTI, the user terminal monitors one or more sPDCCH candidates in the particular sTTI and detects slow DCI.

According to this second aspect, the user terminal activates sTTI monitoring as part of its default behavior. Therefore, unlike the first aspect, this slow DCI containing indication information may not be transmitted at a predetermined periodicity, and may be transmitted aperiodically.

### <Effective Time of Deactivation>

In the second aspect, the effective time of deactivation of sTTI monitoring by a user terminal based on indication information contained in slow DCI may be determined according to rules set forth in the specification (that is, according to rules that are fixed), may be configured by higher layer signaling, or may be specified by physical layer signaling (for example, by slow DCI). Also, this effective time may be defined using either 1 ms-TTIs (subframes) or sTTIs as units (granularity).

If an effective time is specified by slow DCI, this slow DCI may contain information about the time deactivation of sTTI monitoring is effective (effective-time information). This effective-time information may be the value of a predetermined field in slow DCI (hereinafter also referred to as "effective time field"). The effective time field may be comprised of, for example, a predetermined number of bits (unit bits) to define a unit of an effective time, and a predetermined number of bits (effective time bits) defining an effective time within the unit constituted by the unit bits (for example, a 1-ms TTI, an sTTI, etc.).

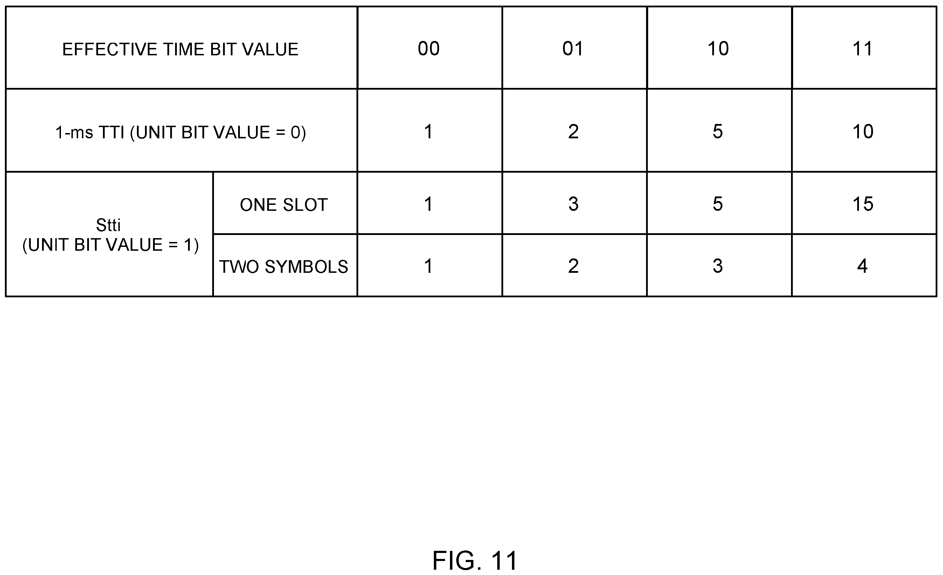

FIG. 11 is a diagram to show an example of an effective time field according to the second aspect. In the case shown in FIG. 11, the effective time field is comprised of three bits, where the most significant bit is the unit bit, and the other two bits are effective time bits.

As shown in FIG. 11, when the value of the unit bit is "0," this may indicate that the effective time of deactivation of sTTI monitoring uses TTIs of 1 ms (subframe) as its units. In this case, depending the values of the two effective time bits, one of four types of effective times (here, 1, 2, 5 and 10 [TTIs]) may be indicated.

On the other hand, when the value of the unit bit is "1," this may indicate that the effective time uses sTTIs as its units. In this case, depending on the values of the two effective time bits, four kinds of effective times may be indicated per sTTI duration (here, one slot or two symbols). For example, in FIG. 11, when the sTTI duration is one slot, one of 1, 3, 5 and 15 [sTTIs] is indicated, and, when the sTTI duration is two symbols, one of 1, 2, 3 and 4 [sTTIs] is indicated.

Note that, in FIG. 11, whether the sTTI duration is one slot or two symbols is configured in advance by higher layer signaling, but this is by no means limiting. For example, two or more unit bits may be provided, so that the sTTI duration may be indicated by using unit bits.

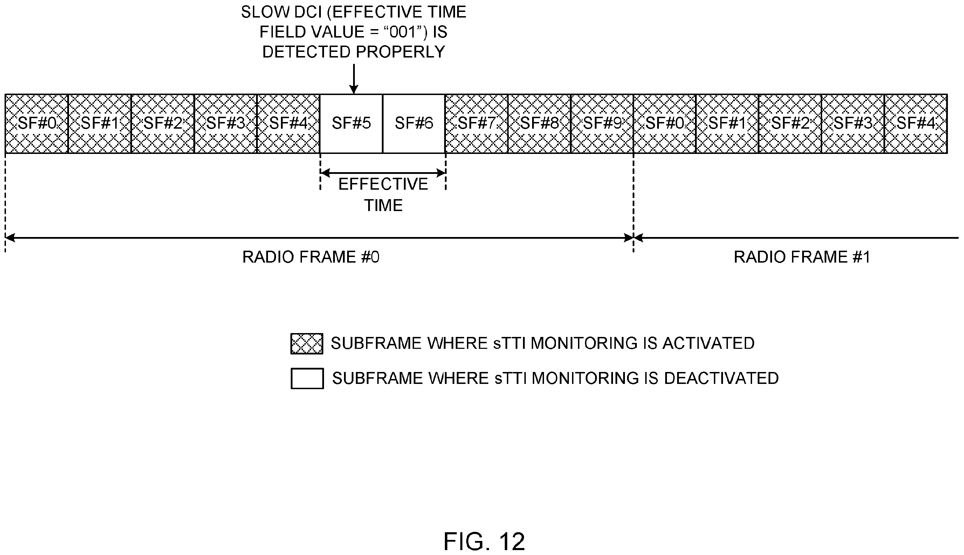

FIG. 12 is a diagram to show an example of an effective time for deactivation according to the second aspect. Note that, although, in FIG. 12, slow DCI is transmitted in the legacy PDCCH, slow DCI may be transmitted in the sPDCCH in a specific sTTI, as described above. Also, in FIG. 12, slow DCI contains the effective time field value described with reference to FIG. 11, the deactivation effective time may be defined in the specification, or configured by the higher layer signaling.

In FIG. 12, the user terminal detects slow DCI containing the effective time field value "001" in subframe #5 of radio frame #0, and the user terminal recognizes that the effective time is formed with TTI units, from the unit bit value "0" of the most significant bit, and recognizes that the effective time is two TTIs (subframes) from the values "01" of the effective time bits of the remaining two bits (see FIG. 11).

In this case, as shown in FIG. 12, the user terminal deactivates sTTI monitoring in the two subframes indicated by the effective time field values (that is, in subframe #5 where slow DCI is detected, and in following subframe #6). Also, the user terminal activates sTTI monitoring in subframe #7 and beyond after the effective time has elapsed.

In FIG. 12, when slow DCI that contains indication information indicative of deactivation of sTTI monitoring is not transmitted (or when this slow DCI is transmitted but fails to be detected in the user terminal), the user terminal activates sTTI monitoring as part of its default behavior. On the other hand, if this indication information-containing slow DCI is transmitted and detected properly in the user terminal, the user terminal deactivates sTTI monitoring in accordance with the indication information.

As shown in FIG. 12, according to the second aspect, when slow DCI containing indication information that deactivates sTTI monitoring is not detected, the user terminal will assume that sTTI monitoring will be activated. Therefore, degradation of performance due to failure to receive the sPDSCH can be prevented.

### <Signaling>

Next, signaling of slow DCI that contains indication information that deactivates sTTI monitoring will be described in detail. This slow DCI containing indication information may be common to a plurality of user terminals, or may be user terminal-specific.

### «User Terminal-Common Slow DCI»

User terminal-common slow DCI according to the second aspect may contain indication information that indicates deactivation of sTTI monitoring in one or more user terminals.

This indication information may be the value of a predetermined field in this slow DCI (for example, the SM field).

To be more specific, when one or more CCs are configured in each user terminal, the indication information in the user terminal-common slow DCI may indicate deactivation of sTTI monitoring per user terminal (first example), per CC in each user terminal (second example), or per group including one or more CCs (CC group) in each user terminal (third example).

Note that the SM field in this user terminal-common slow DCI is the same as the first to the third example (FIG. 5 to FIG. 7) of user terminal-common slow DCI according to the first aspect, except that the bit value corresponding to SM index i indicates deactivation of the sTTI monitoring where this SM index i is assigned, instead of indicating activation/deactivation, so that the description will be omitted.

In addition, when the SM fields illustrated in FIG. 5 to FIG. 7 are applied to the first to the third example of user terminal-common slow DCI according to the second aspect, the bit value corresponding to SM index i may indicate that the sTTI monitoring assigned to this SM index i is deactivated, regardless of whether the bit value is "1" or "0."

### «User Terminal-Specific Slow DCI»

User terminal-specific slow DCI according to the second aspect may contain indication information that indicates deactivation of sTTI monitoring in a user terminal. This indication information may be the value of a predetermined field in this slow DCI (for example, the SM field).

To be more specific, when one or more CCs are configured in this user terminal, the indication information in each user terminal's slow DCI may indicate deactivation of sTTI monitoring for all CCs in common (first example), for each CC (second example), or for each CC group (third example).

Note that the SM field in this user terminal-common slow DCI is the same as the first to the third example (FIG. 8 to FIG. 10) of user terminal-specific slow DCI according to the first aspect, except that the bit value corresponding to SM index i indicates deactivation of the sTTI monitoring where this SM index i is assigned, instead of indicating activation/deactivation, so that the description will be omitted.

In addition, when the SM fields illustrated in FIG. 8 to FIG. 10 are applied to the first to the third example of user terminal-specific slow DCI according to the second aspect, regardless of whether the bit value corresponding to SM index i is "1" or "0," the user terminal may deactivate the sTTI monitoring assigned to SM index i.

As described above, according to the second aspect, indication information (for example, the SM field) that indicates deactivation of sTTI monitoring for all CCs in common, per CC or per CC groups is included in slow DCI, so that, even when one or more CCs are configured in a user terminal, sTTI monitoring in each CC can be controlled adequately.

### (Other Aspects)

As described above, although, according to the present embodiment, indication information that indicates activation or deactivation (activation/deactivation) of sTTI monitoring (first aspect) and/or indication information that indicates deactivation of sTTI monitoring (second aspect) are included in slow DCI that is transmitted in the legacy PDCCH or the sPDCCH, the present embodiment is equally applicable to cases where these pieces of information are included in MAC control elements that are transmitted by MAC signaling.

### (Radio Communication System)

Now, the structure of a radio communication system according to the present embodiment will be described below. In this radio communication system, each radio communication method according to the above-described embodiments is employed. Note that the radio communication method according to each embodiment may be used alone or may be used in combination.

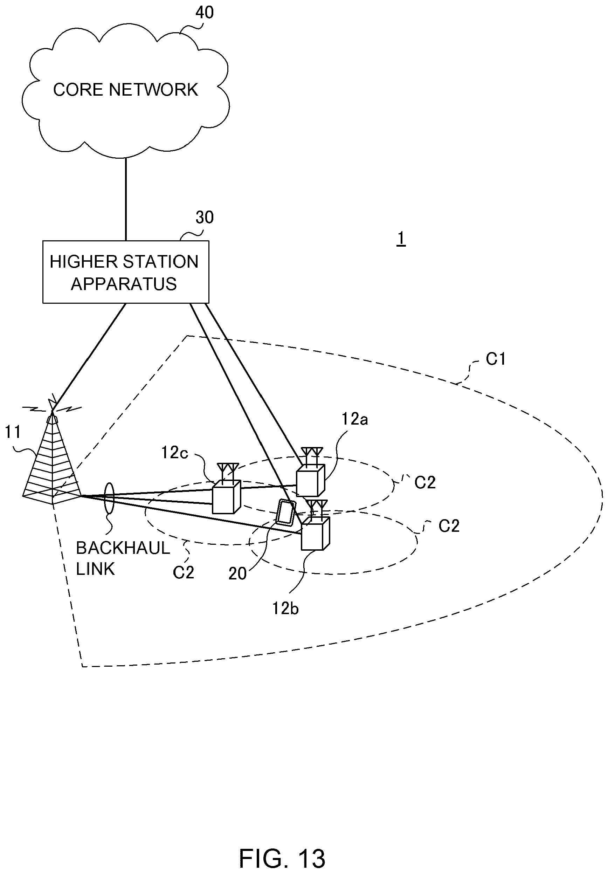

FIG. 13 is a diagram to show an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New Rat)" and so on.

The radio communication system 1 shown in FIG. 13 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A configuration in which different numerologies are applied between cells may be adopted. Note that a "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells.

Furthermore, the user terminal 20 can perform communication using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Also, in each cell (carrier), either long TTIs or short TTIs may be used, or both long TTIs and short TTIs may be used.

Between the user terminals 20 and the radio base station 11, communication can be carried out using a carrier of a relatively low frequency band (for example, 2 GHz) and a narrow bandwidth (referred to as an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL.

In the radio communication system 1, a DL data channel (PDSCH: Physical Downlink Shared CHannel, which is also referred to as "DL shared channel" and so on), which is used by each user terminal 20 on a shared basis, a broadcast channel (PBCH: Physical Broadcast CHannel), L1/L2 control channels and so on are used as DL channels. User data, higher layer control information and SIBs (System Information Blocks) are communicated in the PDSCH. Also, the MIB (Master Information Block) is communicated in the PBCH.

The L1/L2 control channels include DL control channels (a PDCCH (Physical Downlink Control CHannel), an EPDCCH (Enhanced Physical Downlink Control CHannel) and so on), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated using at least one of the PHICH, the PDCCH and the EPDCCH.

In the radio communication system 1, a UL data channel (PUSCH: Physical Uplink Shared CHannel, which is also referred to as "UL shared channel" and so on), which is used by each user terminal 20 on a shared basis, a UL control channel (PUCCH: Physical Uplink Control CHannel), a random access channel (PRACH: Physical Random Access CHannel) and so on are used as UL channels. User data, higher layer control information and so on are communicated by the PUSCH. Uplink control information (UCI), including at least one of retransmission command information (ACK/NACK), channel state information (CSI) and so on is communicated in the PUSCH or the PUCCH. By means of the PRACH, random access preambles for establishing connections with cells are communicated.

### <Radio Base Station>

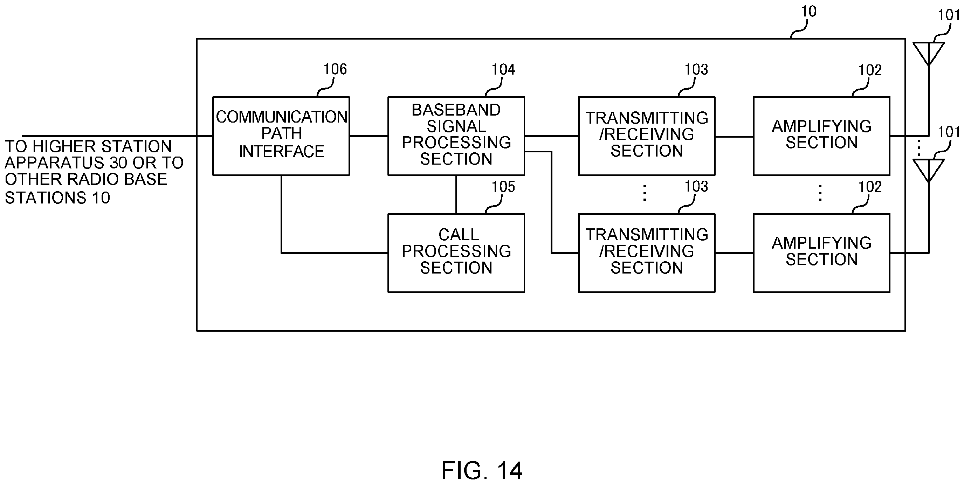

FIG. 14 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, an interface in compliance with the CPRI (Common Public Radio Interface), such as optical fiber, the X2 interface, etc.).

In addition, the transmitting/receiving sections 103 transmit DL signals (for example, at least one of the PDSCH, the sPDSCH and DCI (including fast DCI, slow DCI and/or others)) and receives UL signals (for example, at least one of the PUSCH, the sPUSCH and UCI), in subframes (first TTIs, 1-ms TTIs, TTIs longer than sTTIs, etc.) and/or in sTTIs (second TTIs). Also, the transmitting/receiving sections 103 may transmit slow DCI-related parameters, effective time information and so on.

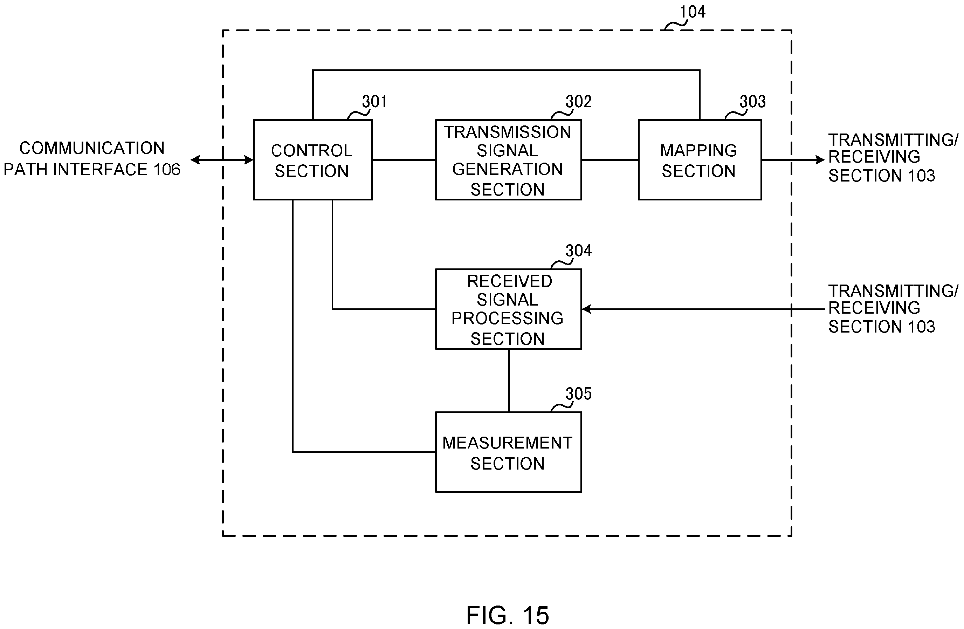

FIG. 15 is a diagram to show an example of a functional structure of a radio base station according to the present embodiment. Note that, although FIG. 15 primarily shows functional blocks that pertain to characteristic parts of the present embodiment, the radio base station 10 has other functional blocks that are necessary for radio communication as well. As shown in FIG. 15, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, the generation of DL signals by the transmission signal generation section 302, the mapping of DL signals by the mapping section 303, the receiving processes (for example, demodulation) for UL signals by the received signal processing section 304 and the measurements by the measurement section 305.

The control section 301 schedules DL data channels (including the PDSCH, the sPDSCH and others) and UL data channels (including the PUSCH, the sPUSCH and others) for user terminals 20.

In addition, the control section 301 controls DCI (DL assignments) including DL data channel scheduling information and/or DCI (UL grants) including UL data channel scheduling information to be mapped to candidate resources (including legacy PDCCH candidates and sPDCCH candidates) for DL control channels (including the legacy PDCCH and the sPDSCH) and transmitted.

In addition, the control section 301 may control sTTI monitoring in the user terminal 20. To be more specific, the control section 301 may control generation and transmission of DCI including indication information that indicates activation/deactivation of sTTI monitoring (first aspect). Alternatively, the control section 301 may control generation and transmission of DCI including indication information that indicates deactivation of sTTI monitoring (second aspect). For example, the control section 301 may generate the indication information based on the scheduling result of sPDSCH and/or sPUSCH addressed to the user terminal 20.

Also, the Control section 301 may also control the configuration of one or more CCs (cells) for the user terminal 20. When one or more CCs are configured in the user terminal 20, the control section 301 may perform control so that the above indication information (for example, the SM field) is generated per user terminal, per CC or per CC group, and DCI including this indication information is transmitted.

The control section 301 can be constituted by a controller, a control circuit or control apparatus that can be described based on general understanding of the technical field to which the present invention pertains.

The transmission signal generation section 302 generates DL signals (including DL data signals, DL control signals, DL reference signals and so on) based on commands from the control section 301, and outputs these signals to the mapping section 303. For the transmission signal generation section 302, a signal generator, a signal generation circuit or signal generation apparatus that can be described based on general understanding of the technical field to which the present invention pertains can be used.

The mapping section 303 maps the DL signals generated in the transmission signal generation section 302 to predetermined radio resources based on commands from the control section 301, and outputs these to the transmitting/receiving sections 103. For the mapping section 303, mapper, a mapping circuit or mapping apparatus that can be described based on general understanding of the technical field to which the present invention pertains can be used.

The received signal processing section 304 performs receiving processes (for example, demapping, demodulation, decoding, etc.) of UL signals transmitted from the user terminals 20 (including, for example, a UL data channel, a UL control channel, a UL control signal, etc.).

The measurement section 305 conducts measurements with respect to the received signals. The measurement section 305 can be constituted by a measurer, a measurement circuit or measurement apparatus that can be described based on general understanding of the technical field to which the present invention pertains.

### <User Terminal>

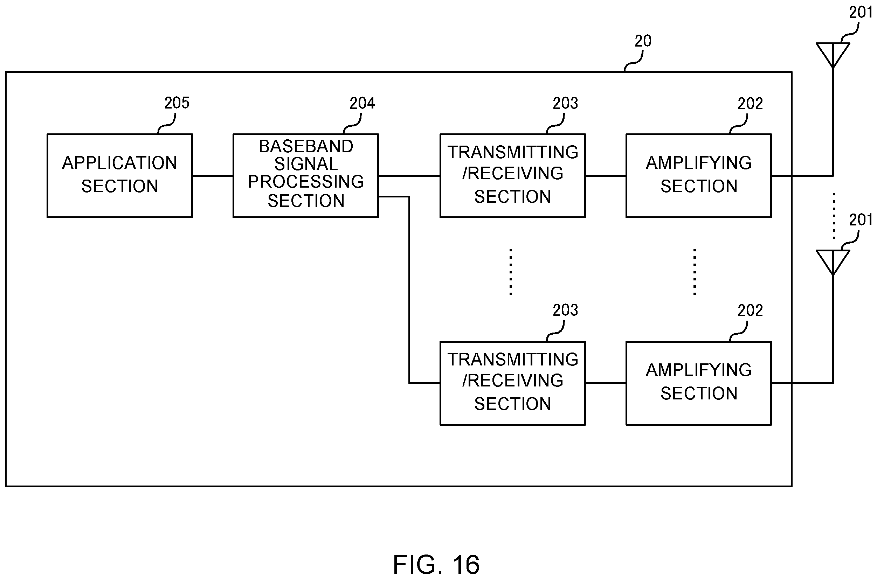

FIG. 16 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Also, the broadcast information is also forwarded to application section 205.

Meanwhile, the UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, DFT process, IFFT process, etc., and transferred to each transmitting/receiving section 203.

The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

In addition, the transmitting/receiving sections 203 receive DL signals (for example, at least one of the PDSCH, the sPDSCH and DCI (including fast DCI, slow DCI and the like)), and transmit UL signals (for example, at least one of the PUSCH, the sPUSCH and UCI) in subframes (first TTIs, 1-ms TTIs, TTIs longer than sTTIs, etc.) and/or in sTTIs (second TTIs). Also, the transmitting/receiving sections 203 may receive slow DCI-related parameters, effective time information and the like.

For the transmitting/receiving sections 203, transmitters/receivers, transmitting/receiving circuits or transmitting/receiving apparatus that can be described based on general understanding of the technical field to which the present invention pertains can be used. Furthermore, a transmitting/receiving section 203 may be structured as one transmitting/receiving section, or may be formed with a transmitting section and a receiving section.

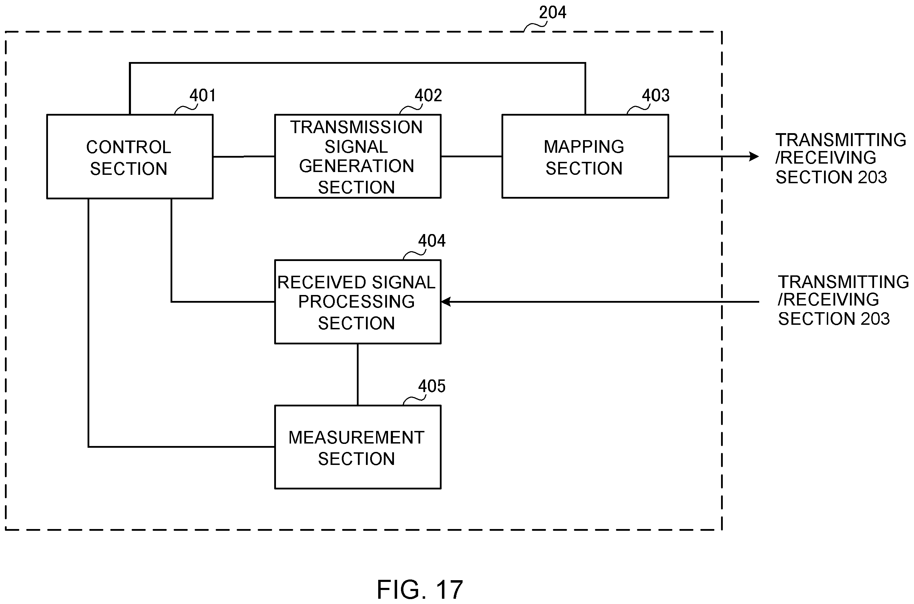

FIG. 17 is a diagram to show an example of a functional structure of a user terminal according to the present embodiment. Note that, although FIG. 17 primarily shows functional blocks that pertain to characteristic parts of the present embodiment, the user terminal 20 has other functional blocks that are necessary for radio communication as well. As shown in FIG. 17, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, the generation of UL signals in the transmission signal generation section 402, the mapping of UL signals in the mapping section 403, the UL signal receiving processes in the received signal processing section 404, the measurements in the measurement section 405 and so on.

The control section 401 controls receipt of DL data channels (including the PDSCH, the sPDSCH and/or others) and transmission of UL data channels (including the PUSCH, the sPUSCH and/or others) based on DCI (DL assignment and/or UL grant) addressed to the user terminal 20.

The control section 401 controls monitoring (sTTI monitoring) of legacy PDCCH candidates in subframes and/or monitoring of sPDCCH candidates in sTTIs. More specifically, the control section 401 controls sTTI monitoring based on DCI (slow DCI) that is transmitted in the legacy PDCCH or in a specific sTTI. If the slow DCI is not detected, the control section 401 may assume that sTTI monitoring is activated.

The slow DCI may contain indication information indicative of activation or deactivation of sTTI monitoring (first aspect), or indication information that indicates deactivation of sTTI monitoring (second aspect).

For example, if slow DCI that contains indication information indicative of activation or deactivation of sTTI monitoring is detected properly, the control section 401 may activate or deactivate sTTI monitoring in accordance with the indication information (first Aspect). This slow DCI is transmitted from the radio base station 10 at a predetermined periodicity, and the control section 401 can make the effective time of the above activation or deactivation the same as the periodicity of slow DCI.

Also, when slow DCI that contains indication information that indicates deactivation of sTTI monitoring is detected properly, the control section 401 may deactivate sTTI monitoring in accordance with the indication information (second aspect). The slow DCI is transmitted aperiodically from the radio base station 10, and the control section 401 may control the effective time of the above deactivation by using at least one of a fixed rule, higher layer signaling and DCI.

Also, the control section 401 may control the configuration of one or more CCs (cells). When one or more CCs are configured in the user terminal 20, based on the above indication information (for example, the SM field value) included in the slow DCI transmitted from the radio base station 10, the control section 401 may control sTTI monitoring for all CCs, per CC or per CC group.

For the control section 401, a controller, a control circuit or control apparatus that can be described based on general understanding of the technical field to which the present invention pertains can be used.

The transmission signal generation section 402 generates (for example, encoding, rate matching, puncturing, modulation, etc.) UL signals based on commands from the control section 401 and outputs the signal to the mapping section 403. For the transmission signal generation section 402, a signal generator, a signal generation circuit or signal generation apparatus that can be described based on general understanding of the technical field to which the present invention pertains can be used.

The mapping section 403 maps the UL signals generated in the transmission signal generation section 402 to radio resources based on commands from the control section 401, and output the result to the transmitting/receiving sections 203. For the mapping section 403, a mapper, a mapping circuit or mapping apparatus that can be described based on general understanding of the technical field to which the present invention pertains can be used.

The received signal processing section 404 performs the receiving processes (for example, demapping, demodulation, decoding, etc.) of DL signals. The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

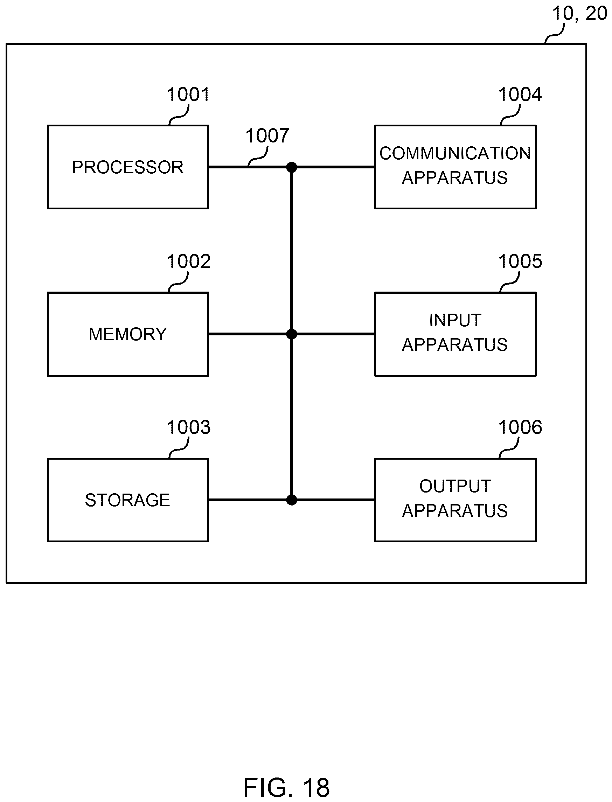

For example, the radio base station, user terminals and so on according to embodiments of the present invention may function as a computer that executes the processes of the radio communication method of the present invention. FIG. 18 is a diagram to show an example of a hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and/or the like for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Further, a radio frame may be comprised of one or more periods (frames) in the time domain. Each of one or more periods (frames) constituting a radio frame may be referred to as a "subframe." Further, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the period of time (for example, the number of symbols) in which transport blocks, code blocks and/or codewords are actually mapped may be shorter than the TTI.

Note that, when one slot or one mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "subframe," a "normal TTI (TTI in LTE Rel. 8 to 12)," a "long TTI," a "normal subframe," a "long subframe," and so on. A TTI that is shorter than a normal TTI may be referred to as an "sTTI," a "shortened TTI," a "short TTI," a "partial TTI (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms or a TTI that is longer than a short TTI, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one mini-slot, one subframe or one TTI in length. One TTI and one subframe each may be comprised of one or more resource blocks. Note that one or more RBs may be referred to as a "physical resource block (PRB: Physical RB)," a "subcarrier group (SCG: Sub-Carrier Group)," a "resource element group (REG)," an "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (LI control signal) "and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Further, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. Thus, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2017-003666, filed on January 12, 2017, including the specification, drawings and abstract, is incorporated herein by reference in its entirety.

## Claims

1. A user terminal comprising:
a receiving section that receives downlink control information (DCI); and
a control section that controls monitoring of a DL control channel candidate in a second transmission time interval (TTI), which is shorter than a first TTI, based on the DCI,
wherein, when the DCI is not detected, the control section assumes that the monitoring of the DL control channel candidate in the second TTI is activated.

2. The user terminal according to claim 1, wherein:
the DCI includes indication information, which indicates activation or deactivation of the monitoring of the DL control channel candidate in the second TTI; and
when the DCI is detected properly, the control section activates or deactivates the monitoring of the DL control channel candidate in the second TTI in accordance with the indication information.

3. The user terminal according to claim 2 wherein:
the DCI is transmitted from a radio base station at a predetermined periodicity; and
the control section makes an effective time of the activation or the deactivation the same as the predetermined periodicity at which the DCI is transmitted.

4. The user terminal according to claim 1 wherein:
the DCI includes indication information, which indicates deactivation of the monitoring of the DL control channel candidate in the second TTI; and
when the DCI is detected properly, the control section deactivates the monitoring of the DL control channel candidate in the second TTI in accordance with the indication information.

5. The user terminal according to claim 4, wherein:
the DCI is transmitted aperiodically from the radio base station; and
the control section controls an effective time of the deactivation using at least one of a fixed rule, higher layer signaling and the DCI.

6. A radio communication method comprising, in a user terminal, the steps of:
receiving downlink control information (DCI); and
controlling monitoring of a DL control channel candidate in a second transmission time interval (TTI), which is shorter than a first TTI, based on the DCI,
wherein, when the DCI is not detected, the user terminal assumes that the monitoring of the DL control channel candidate in the second TTI is activated.
